# FASCICULE DE BREVET EUROPEEN

(11) **EP 1 082 392 B1**
(45) Date de publication et mention de la délivrance du brevet: **10.03.2004**
(21) Numéro de dépôt: 99916980.8
(22) Date de dépôt: 04.05.1999
(51) Int. Cl.: C09D 5/00, C23F 11/10, B05D 3/04

(54) **COMPOSITION HYDROSOLUBLE COMME REVETEMENT DE SURFACES METALLIQUES SOUS FORME DE FILMS SECS ETANCHES A LA CORROSION ATMOSPHERIQUE**
WASSERLÖSLICHE ZUSAMMENSETZUNG ALS BESCHICHTUNG FÜR METALLOBERFLÄCHEN IN FORM VON TROCKENEN FILMEN, DIE ABDICHTEND GEGENÜBER ATMOSPHÄRISCHER KORROSION SIND
WATER SOLUBLE COMPOSITION AS METAL SURFACE COATING IN THE FORM OF DRY FILMS PROOF TO ATMOSPHERIC CORROSION

(30) Priorité: 04.05.1998 FR 9805624
(43) Date de publication de la demande: 14.03.2001
(73) Titulaire: Total France, 92800 Puteaux (FR)
(72) Inventeur: STEINMETZ, Pierre, F-54500 Vandoeuvre (FR); COTTERET, Jacques, F-69390 Millery (FR); CHAUVINEAU, Corinne, F-75014 Paris (FR)
(74) Mandataire: Cabinet Hirsch
(86) Numéro de dépôt international: PCT/FR1999/001050
(87) Numéro de publication internationale: WO 1999/057206

(56) Documents cités:
- WO-A-91/04303
- GB-A- 1 276 008
- US-A- 4 342 596

## Description

La présente invention concerne une composition hydrosoluble comme revêtement temporaire, sous forme de film sec, de surfaces métalliques de formes variées, susceptibles de s'oxyder à l'air. Elle concerne également le procédé de dépôt de la composition sur ces surfaces ainsi que son utilisation pour la protection de diverses surfaces métalliques spécifiques.

En effet, après formation des plaques ou des tubes métalliques, il est commun de les stocker de longs mois sous abri avant d'être utilisés. Ce stockage toujours possible est un souci pour les fabricants car, sans protection contre l'oxydation de l'air et de l'humidité, il se forme à leur surface soit une couche d'oxydation, soit des phénomènes de piqûres et autres correspondant à une détérioration progressive de l'état de surface de ces matériaux. Or, toute altération ou détérioration de leur surface peut affecter considérablement la mise en oeuvre ou l'efficacité à terme des traitements ultérieurs qu'on leur fait subir. Ainsi, il s'agit de diminuer les risques de ruptures ou de fêlures au cours du formage ou de l'emboutissage de ces matériaux , ou encore l'écaillage ou la fissuration des revêtements dont on les recouvre.

Pour éviter ces inconvénients liés à l'oxydation à l'air, il est nécessaire d'isoler ces supports métalliques, plaques ou tubes de l'air et pour cela plusieurs techniques ont déjà été employées.

Ainsi, différents types de revêtements temporaires, imperméables à l'air ont été développés. Outre leur caractère temporaire, ces revêtements doivent être faciles à appliquer, mais doivent également s'éliminer facilement sans produire de pollution supplémentaire, de modification de l'état de surface des supports, ni de gêne au cours de leur manutention.

Un premier type de revêtement usuellement utilisé est constitué de compositions huileuses ou semi-huileuses obtenues par mélange d'eau et d'huile minérale en émulsion en présence d'un inhibiteur de corrosion comme dans le brevet US 4.342.596.

Un autre type de revêtement huileux comprend un mélange émulsionné dans l'eau de paraffines et de paraffines partiellement estérifiées, d'une faible proportion d'amides résultant de la réaction d'une amine sur un acide carboxylique à longue chaîne, d'un mélange d'alcool, d'hydrocarbures et d'un agent tensioactif décrit dans le brevet US 4.479.981.

De tels revêtements sont présentés comme ayant une bonne stabilité et constituant une bonne barrière à l'oxydation atmosphérique. En outre, ils jouent un rôle lubrifiant lors de traitement ultérieurs des matériaux ainsi protégés. Cependant , pour un simple stockage, le caractère huileux de ces revêtements constitue une gêne et une source de pollution non négligeable.

D'autres revêtements de protection temporaire sont obtenus par épandage sur la surface à protéger de l'air atmosphérique, de composition solubles dans l'eau obtenues par mélange de polyoxyalkylèneglycols et de dérivés alkylés d'anhydride succinique, comme la composition décrite dans le brevet US 5.316.696. Ces revêtements bien que non huileux constituent des films liquides de protection à la surface des matériaux métalliques.

On mentionne en outre dans le brevet EP 0 556 087 que certaines combinaisons d'acides mono et dicarboxyliques peuvent être appliquées en tant qu'inhibiteur de la corrosion atmosphérique sous forme de revêtements de matériaux à protéger dont la nature du revêtement n'est pas définie.

La présente. invention vise un revêtement pour protéger des surfaces métalliques de la corrosion atmosphérique sous forme d'un film sec non huileux permettant une manutention plus facile de ces surfaces tout en limitant les risques de pollution du local de stockage ou de salissures des mains des manutentionnaires. Elle vise en outre la formation d'un film sec s'éliminant facilement par lavage à l'eau et séchage, ou pouvant demeurer sur la surface métallique sous un revêtement ultérieur, peinture ou autres revêtements. Pour certaines peintures et certains vernis, la présence du film sec améliore l'adhérence des couches ultérieures.

La présente invention a pour objet une composition hydrosoluble comme revêtement temporaire, sous forme de film sec, de surfaces métalliques sensibles à l'oxydation atmosphérique contenant au moins un acide carboxylique caractérisée en ce qu'elle comprend au moins 20% en poids d'une combinaison d'au moins un monoacide carboxylique linéaire saturé avec au moins un monoacide carboxylique linéaire insaturé sous forme de sels alcalins , alcalino-terreux ou d'amine, comprenant chacun une chaîne carbonée d'un nombre impair d'atomes de carbone variant de 5 à 21, et éventuellement au moins 0,5% en poids d'un dérivé triazole.

La combinaison de deux monoacides carboxyliques à chaîne carbonée impaire, l'un étant saturé, l'autre insaturé améliore de façon tout à fait imprévisible dans le film sec l'efficacité de la protection notamment contre la formation de corrosion sur les surfaces métalliques. L'effet anticorrosion atmosphérique de cette synergie est accentué pour les aciers revêtus de zinc par l'ajout d'un composé triazole.

De façon plus précise, cette composition selon l'invention comprend 25 à 40% en poids de la dite combinaison, de 0,5 à 5% en poids d'au moins un dérivé triazole et de 40 à 50% en poids d'eau.

Dans un mode préféré de l'invention, la combinaison est constituée de deux monoacides carboxyliques choisis respectivement parmi les acides saturés comprenant de 5 à 15 atomes de carbone et parmi les acides insaturés comprenant de 9 à 21 atomes de carbone, ces deux acides présentant un rapport molaire acide saturé/acide insaturé compris entre 5 et 20.

En particulier, la combinaison est constituée de 20 à 35 % en poids dans la composition d'au moins un sel d'acide saturé choisi entre l'acide heptanoïque et l'acide nonanoïque et de 2 à 5% en poids dans la composition d'un sel d'acide undécylènique.

Le dérivé triazole selon l'invention est choisi dans le groupe constitué par les benzotriazoles, les tolyltriazoles et les alkyltriazoles.

Pour faciliter le recouvrement de la surface métallique à protéger et accélérer la vitesse de séchage, on ajoute à la composition de préférence de 0,005 à 2% en poids d'au moins un agent mouillant. Cet agent mouillant est choisi dans le groupe constitué par les tensioactifs anioniques tels que les alkylsulfates ou les tensioactifs non ioniques tels que les composés éthoxylés du type alcools gras ou alkylphénols.

Un deuxième objet de l'invention est le procédé de dépôt et de formation du film protecteur temporaire à partir de la dite composition hydrosoluble. Il consiste :
- à diluer la dite composition entre 1 et 10 % en poids dans l'eau,
- à mettre en contact la solution ainsi formée avec la surface métallique,
- à égoutter la dite solution puis à envoyer un courant d'air, éventuellement chauffé sur la dite surface métallique jusqu'à séchage.

Pour mettre en contact la solution formée avec la surface métallique, on utilisera tous moyens, notamment l'arrosage, la pulvérisation ou encore l'immersion.

Le film ainsi obtenu se présente sous la forme d'un film sec non huileux qui ne colle pas et qui ne laisse aucune salissure sur les mains au cours de la manutention des plaques ou bottes de tubes métalliques et qui les protège de la corrosion atmosphérique.

Pour enlever ce film, il suffit d'un simple lavage à l'eau des surfaces métalliques et d'un séchage à l'air.

Un troisième objet de l'invention, est l'utilisation de ces compositions concentrées sous forme de films secs non huileux pour la protection des surfaces métalliques en acier carbone, revêtues zinc ou galvanisées et les alliages cuivreux et aluminium.

Dans la suite de la présente description, les exemples sont donnés à titre d'illustrations mais ne peuvent être limitatifs de l'invention.

### EXEMPLE I

Le présent exemple vise à montrer l'effet anti-corrosif de films secs obtenus par combinaison de deux acides carboxyliques selon l'invention pour la protection de surfaces métalliques.

On a préparé dix compositions C₁, C₂, C₃, C₄, C₅, X₁, X₂, X₃, X₄ et X₅, les compositions Xᵢ correspondant à des compositions selon l'invention, leur contenu étant décrit dans le tableau I ci-après (en % poids):

**TABLEAU I**

| Composants | C₁ | C₂ | C₃ | C₄ | C₅ | X₁ | X₂ | X₃ | X₄ | X₅ |
|---|---|---|---|---|---|---|---|---|---|---|
| Acide heptanoïque | 10 | 0 | 20 | 0 | 0 | 18 | 10 | 20 | 25 | 35 |
| Acide nonanoique | 5 | 5 | 0 | 20 | 0 | 7 | 5 | 0 | 0 | 0 |
| Acide undécylènique | 0 | 5 | 0 | 0 | 10 | 4 | 10 | 2 | 4 | 5 |
| benzotriazole | 0 | 0 | 0 | 0 | 0 | 0 | 0.5 | 0 | 0 | 0 |
| tolyltriazole | 0 | 0 | 0 | 0 | 0 | 1 | 0 | 0 | 2.5 | 3 |

Pour effectuer des tests sur des surfaces métalliques, les solutions C₁ à C₅, et X₁ à X₅ sont utilisées diluées à 3 % dans de l'eau osmosée.

Deux types de tests sont effectués pour vérifier la protection, un test par voie humide et un test par voie sèche.

Le test par voie humide, effectué en laboratoire, consiste à immerger dans un cristallisoir rempli de 200 ml de la solution à tester, deux types de tubes métalliques de section carrée de 4 mm et de longueur 5 cm, constitués par des aciers carbone de type « DKP « , les uns J1 n'étant pas revêtus, les autres J2 étant revêtus zinc (galvanisés) pendant au moins 40 jours : on observe visuellement leur état de surface tous les jours, en particulier la face de chaque tube en contact avec le fond du cristallisoir dans lequel il est immergé. On arrête le test lorsque des taches de corrosion (pour les non revêtus) ou de rouille blanche (pour les revêtus zinc) apparaissent en surface ou au bout du 40^{ème} jour. Les périodes de temps au bout desquelles on observe visuellement la formation de taches de corrosion ou de rouille blanche pour chacun de ces essais sont données dans le tableau II ci-après.

**TABLEAU II**

| | J₁ | J₂ |
|---|---|---|
| C₁ | 12 jours | 2 heures |
| C₂ | 12 jours | 2 heures |
| C₃ | 12 jours | 2 heures |
| C₄ | 8 jours | 2 heures |
| C₅ | 8 jours | 2 heures |
| X₁ | rien après 40 jours | 2 jours |
| X₂ | rien après 40 jours | 2 jours |
| X₃ | rien après 40 jours | 1 jour |
| X₄ | rien après 40 jours | 2 jours |
| X₅ | rien après 40 jours | 2 jours |

Par voie sèche, les tubes métalliques de même section carrée mais de 10 m de long sont immergés dans ces solutions, puis égouttés et enfin séchés à l'air avant d'être mis en botte puis stockés à l'abri des eaux de ruissellement. L'ouverture et l'observation des surfaces a été faite trois mois plus tard. Les constatations sont donnés dans le tableau III ci-après.

**TABLEAU III**

| | J₁ | J₂ |
|---|---|---|
| X₁ | pas de corrosion | Quelques taches près de la soudure |
| X₂ | pas de corrosion | pas de corrosion |
| X₃ | pas de corrosion | Quelques taches dépôt grisâtre |
| X₄ | pas de corrosion | Quelques taches près de la soudure |
| X₅ | pas de corrosion | pas de corrosion |

Le pouvoir inhibiteur de ces compositions a par ailleurs été déterminé par des mesures électrochimiques effectuées avec des échantillons de fer et de zinc. Ces essais ont été réalisés conformément aux normes ASTM G59-91 pour la détermination des résistances de polarisation (Rₚ) et ASTM G5-87 et G102-89 pour la détermination des courants de corrosion (I_{corr})

Les solutions C1 à C5 et X1 à X5 ont été diluées à 10% dans une eau additionnée de sulfate de sodium, chlorure de sodium et hydrogénocarbonate de sodium en quantités telles qu'après dilution, la teneur de ces constitutants dans la solution finale soit conforme à celle préconisée par la norme ASTM D 1384-87, soit : 148 mg Na₂SO₄, 165 mg NaCl et 138 mg NaHCO₃.

Les valeurs mesurées pour les courants de corrosion se répartissent au sein de deux fourchettes de valeurs, correspondant respectivement aux solutions de type Cᵢ et à celles de type Xᵢ. Les valeurs extrêmes sont données dans le tableau IV.

**TABLEAU IV**

| Solution | Type Cᵢ | Type Xᵢ |
|---|---|---|
| Rp Fer (kΩ.cm²) | 100 à 500 | 600 à 900 |
| Rp Zn (kΩ.cm²) | 50 à 300 | 600 à 3000 |
| Icorr Fer (nA.cm⁻²) | 200 à 2000 | 85 à 150 |
| Icorr Zn (nA.cm⁻²) | 200 à 1200 | 19 à 100 |

Avec les solutions de type X₁ la vitesse de corrosion est sensiblement plus faible qu'avec les solutions de type C₁, comme en attestent les évolutions en sens inverses de la résistance de polarisation et du courant de corrosion.

D'après ces résultats, on constate la supériorité de la combinaison d'acides monocarboxyliques saturés et d'acides monocarboxyliques insaturés par rapport à ces mêmes acides pris séparément, et cela de préférence sous forme de films secs.

### EXEMPLE II

Cet exemple vise à démontrer l'intérêt des films secs selon l'invention comme revêtement préventif non gras de la corrosion atmosphérique même sous les couches de peinture, de vernis ou d'apprêt, appliquées directement sur le film sec.

Des tubes en acier de type « DKP » de section carrée (25 mm x 25 mm), d'épaisseur 3 mm et de 10 cm de long ont été trempés pendant 2 minutes dans les solutions diluées X₁ à X₅, puis séchés à l'air pendant 24 heures.

Ces tubes dont l'aspect propre et sec a été dûment constaté, ont ensuite été revêtus par l'une ou l'autre des matières Y₁ à Y₃ dont le descriptif est donné ci-après.

Y₁ est un vernis incolore FA 20 appliqué par pulvérisation, puis séché pendant deux heures et enfin cuit à l'étuve pendant 1 heure à 100°C.

Y₂ est une laque noire brillante SEDOCOLOR S160 appliquée par pulvérisation, puis séchée pendant 2 heures et enfin cuite à l'étuve pendant une heure à 100°C.

Y₃ est un apprêt granité PLASTCOLOR gris clair pulvérisé puis séché pendant 24 heures.

Pour chaque revêtement on observe l'adhérence du film de peinture, de vernis ou d'apprêt sur les tubes préalablement revêtus des compositions X₁ à X₅ selon l'invention. Ce test d'adhérence consiste à appliquer un ruban adhésif de 10 cm de long sur chaque tube et de le décoller après 2 minutes. L'observation de la surface du tube permet d'apprécier s'il y a eu ou non arrachement du revêtement. Pour chacun des revêtements X₁ à X₅, et chaque revêtement Y₁ à Y₃ on observe une bonne adhérence du revêtement et aucun arrachement.

Pour chacun des films de protection X₁ à X₅ suivi de chaque revêtement Y₁ à Y₃ on observe une bonne adhérence du revêtement et on ne constate aucun arrachement du revêtement.

## Revendications

1. Composition hydrosoluble comme revêtement temporaire, sous forme de film sec, de surfaces métalliques sensibles à l'oxydation atmosphérique contenant au moins un acide carboxylique **caractérisée en ce qu'**elle comprend au moins 20% en poids d'une combinaison d'au moins un monoacide carboxylique linéaire saturé avec au moins un monoacide carboxylique linéaire insaturé, sous forme de sels alcalins , alcalino-terreux ou amine, la chaîne carbonée de chaque acide comprenant un nombre impair d'atomes de carbone variant de 5 à 21 et éventuellement au moins 0,5% en poids d'un dérivé triazole.

2. Composition selon la revendication 1 **caractérisée en ce qu'**elle comprend 25 à 40% en poids de la dite combinaison, de 0,5 à 5% en poids d'au moins un dérivé triazol et de 40 à 50% en poids d'eau.

3. Composition selon l'une des revendications 1 ou 2 **caractérisée en ce que** la combinaison est constituée de deux monoacides carboxyliques choisis respectivement parmi les acides saturés comprenant de 5 à 15 atomes de carbone et parmi les acides insaturés comprenant de 9 à 21 atomes de carbone, ces deux acides présentant un rapport molaire acide saturé/acide insaturé compris entre 5 et 20.

4. Composition selon les revendications 1 à 3 **caractérisée en ce que** la combinaison est constituée par de 20 à 35 % en poids de la composition d'au moins un sel d'acide saturé choisi entre l'acide heptanoïque et l'acide nonanoïque et de 2 à 5 % en poids d'un sel d'acide undécylènique.

5. Composition selon l'une des revendications 1 à 4 **caractérisée en ce que** le dérivé triazole est choisi dans le groupe constitué par les benzotriazoles, les tolyltriazoles et les alkyltriazoles.

6. Composition selon les revendications 1 à 5 **caractérisée en ce que** la composition contient de 0,005 à 2% en poids d'agent mouillant choisi dans le groupe constitué par les tensioactifs anioniques tels que les alkylsulfates et les tensioactifs non ioniques tels que les composés éthoxylés du type alcools gras et les alkylphénols.

7. Procédé de dépôt de la composition hydrosoluble selon les revendications 1 à 6 **caractérisé en ce qu'**il consiste :
- à diluer la dite composition entre 1 et 10% en poids dans l'eau,
- à mettre en contact la solution ainsi formée avec la surface métallique,
- à égoutter la dite solution puis à envoyer un courant d'air, éventuellement chauffé sur la dite surface métallique jusqu'à séchage.

8. Utilisation de la composition selon les revendications 1 à 6 concentrée sous forme de film sec non huileux pour couvrir des surfaces métalliques en acier carbone, revêtues zinc ou galvanisées et les alliages au cuivre et aluminium.

## Claims

1. A water-soluble composition as a temporary coating, in the form of a dry film, for metal surfaces subject to atmospheric oxidation, containing at least one carboxylic acid, **characterised in that** it comprises at least 20% by weight of a combination of at least one saturated linear carboxylic monoacid with at least one unsaturated linear carboxylic monoacid, in the form of alkaline, alkaline-earth or amine salts, the carbon chain of each acid comprising an uneven number of carbon atoms varying from 5 to 21 and, optionally, at least 0.5% by weight of a triazole derivative.

2. The composition according to claim 1, **characterised in that** it comprises from 25 to 40% by weight of said combination, from 0.5 to 5% by weight of at least one triazole derivative, and from 40 to 50% water.

3. The composition according to one of claims 1 or 2, **characterised in that** said combination is constituted by two carboxylic monoacids selected respectively from saturated acids comprising 5 to 15 carbon atoms and from unsaturated acids comprising from 9 to 21 carbon atoms, these two acids having a saturated acid/unsaturated acid molar ratio comprised between 5 and 20.

4. The composition according to claims 1-3, **characterised in that** the combination is constituted by from 20 to 35% by weight of the composition of at least one salt of a saturated acid selected from heptanoic acid and nonanoic acid and from 2 to 5% by weight of an undecylenic acid salt.

5. The composition according to one of claims 1 to 4, **characterised in that** the triazole derivative is selected from the group constituted by benzotriazoles, tolyltriazoles and alkyltriazoles.

6. The composition according to claims 1-5, **characterised in that** the composition contains from 0.005 to 2% by weight wetting agent selected from the group consisting of anionic surfactants such as alkylsulfates and non-ionic surfactants such as ethoxylated compounds of the fatty alcohol and alkylphenol type.

7. A method for applying the concentrated composition according to claims 1-6, **characterised in that** it consists:
- in diluting said composition to between 1 and 10% by weight in water:
- in bringing the solution thus formed into contact with the metal surface,
- in draining said solution and then delivering a stream of air, optionally heated, to said metal surface until it is dry.

8. Use of the concentrated composition according to claims 1-6, in the form of a non-oily dry film for covering metallic surfaces in carbon steel, zinc coated or galvanised, and the copper and aluminium alloys.

## Patentansprüche

1. Wasserlösliche Zusammensetzung als zeitweilige Beschichtung, in Gestalt eines trockenen Films, von metallischen Oberflächen, die für atmosphärische Oxidation empfindlich sind, die mindestens eine Carbonsäure enthält, **dadurch gekennzeichnet, daß** sie mindestens 20 Gew.-% einer Kombination von mindestens einer linearen gesättigten Monocarbonsäure mit mindestens einer linearen ungesättigten Monocarbonsäure in Form von Alkali-, Erdalkali- oder Amin-Salzen, wobei die Kohlenstoffkette jeder Säure eine ungerade Anzahl von Kohlenstoff-atomen, die von 5 bis 21 variiert, aufweist, und gegebenenfalls mindestens 0,5 Gew.-% eines Triazol-Derivats aufweist.

2. Zusammensetzung nach Anspruch 1, **dadurch gekennzeichnet, daß** sie 25 bis 40 Gew.-% der Kombination, 0,5 bis 5 Gew.-% mindestens eines Triazol-Derivats und 40 bis 50 Gew.-% Wasser aufweist.

3. Zusammensetzung nach einem der Ansprüche 1 oder 2, **dadurch gekennzeichnet, daß** die Kombination gebildet wird von zwei Monocarbonsäuren, die jeweils ausgewählt sind unter den 5 bis 15 Kohlenstoffatome enthaltenden gesättigten Säuren und unter den 9 bis 21 Kohlenstoffatome enthaltenden ungesättigten Säuren, wobei diese zwei Säuren ein Molverhältnis gesättigte Säure/ungesättigte Säure zwischen 5 und 20 besitzen.

4. Zusammensetzung nach den Ansprüchen 1 bis 3, **dadurch gekennzeichnet, daß** die Kombination gebildet wird von 20 bis 35 Gew.-% der Zusammensetzung aus mindestens einem Salz einer gesättigten Säure, die ausgewählt ist unter der Heptansäure und der Nonansäure, und von 2 bis 5 Gew.-% eines Salzes der Undecylensäure.

5. Zusammensetzung nach einem der Ansprüche 1 bis 4, **dadurch gekennzeichnet, daß** das Triazol-Derivat ausgewählt ist aus der Gruppe, die von den Benzotriazolen, den Tolyltriazolen und den Alkyltriazolen gebildet wird.

6. Zusammensetzung nach den Ansprüchen 1 bis 5, **dadurch gekennzeichnet, daß** die Zusammensetzung 0,005 bis 2 Gew.-% eines Netzmittels enthält, das ausgewählt ist aus der Gruppe, die von den anionischen Tensiden wie den Alkylsulfaten und den nicht-ionischen Tensiden wie den ethoxylierten Verbindungen vom Fettalkohol-Typ und den Alkylphenolen gebildet wird.

7. Verfahren zur Aufbringung der wasserlöslichen Zusammensetzung nach den Ansprüchen 1 bis 6, **dadurch gekennzeichnet, daß** es darin besteht:
- die Zusammensetzung in Wasser auf zwischen 1 und 10 Gew.-% zu verdünnen,
- die so gebildete Lösung mit der metallischen Oberfläche in Berührung zu bringen,
- die Lösung abtropfen zu lassen, dann der metallischen Oberfläche einen gegebenenfalls erwärmten Luftstrom bis zur Trocknung zuzuführen.

8. Verwendung der Zusammensetzung nach den Ansprüchen 1 bis 6, konzentriert, in Gestalt eines nicht öligen trockenen Films zum Bedecken metallischer Oberflächen aus Kohlenstoffstahl, zinkbeschichteter oder galvanisierter metallischer Oberflächen und von Kupfer- und Aluminium-Legierungen.
